# EUROPEAN PATENT SPECIFICATION

(11) **EP 2 592 199 B1**
(45) Date of publication and mention of the grant of the patent: **26.04.2017**
(21) Application number: 12191435.2
(22) Date of filing: 06.11.2012
(51) Int. Cl.: E04H 12/10, E04H 12/08

(54) **TOWER FOR A WIND ENERGY DEVICE**
TURM FÜR EINE WINDENERGIEANLAGE
TOUR POUR UNE ÉOLIENNE

(30) Priority: 09.11.2011 NL 2007759
(43) Date of publication of application: 15.05.2013
(73) Proprietor: KCI the engineers B.V., 3125 AE Schiedam (NL)
(72) Inventor: Korndorffer, Dieter, 3125 AE Schiedam (NL); van Gelder, Klaas Boudewijn, 2282 NW Rijswijk (NL)
(74) Representative: V.O.

(56) References cited:
- EP-A2- 1 729 007
- EP-A2- 2 067 915
- DE-A1-102005 012 817
- DE-A1-102005 047 961
- GB-A- 2 476 051
- US-A1- 2011 138 721

## Description

This invention relates to a tower for a wind energy device, including a lattice tower part which has a polygonal cross section at least at a top, and a tubular tower part extending thereabove which has a substantially circular cross section at the bottom.

Such a tower is known, for example, from WO2008/064861. In the known tower, a frustoconical envelope is provided to couple a lattice tower to a tubular tower part. A disadvantage of that configuration is that it is relatively weak and requires relatively much material. Moreover, the conical bending of plate material is rather laborious and relatively difficult since bending is to be done about two different axes.

Another configuration is known from DE102005033600. In the tower known from this publication, a tube part is deformed over a relatively great length for it to adjoin a tower part extending under it. Such a configuration is relatively difficult to manufacture and thus rather costly.

Publication US 2011/138721 relates to a wind turbine tower assembly with a tower of which the base section includes a plurality of legs.

Publication EP 2067915 relates to a lattice tower for an offshore wind turbine comprising four legs with a transition piece on top. The transition piece has a tubular upper part and a lattice lower part.

Publication EP 1729007 relates to a lattice tower for a wind turbine, wherein the connection between the tubular part of the wind turbine tower and the lattice structure is made by means of a connection piece.

GB 2476051 discloses a tower with a transition piece between a lattice tower part and a tubular tower part, wherein the transition piece has a lowermost part cross-section adapted to fit onto the lattice tower part and has an upper part receiving the tubular tower part.

The present invention contemplates an improved tower for a wind energy device. To this end, a tower is characterized by the features of claim 1.

With advantage, the lattice tower part and the tubular tower part are coupled to each other by means of a transition body, wherein the lattice tower part extends partly along the transition body, wherein the transition body includes a lowermost part having a polygonal cross section adapted to the lattice tower part, as well as an uppermost part having a circular cross section adapted to the circular cross section of the tubular tower part.

In this manner, there is obtained a relatively strong, reliable and durable coupling between the tower sections (at least, the lattice tower part and the tubular tower part), while furthermore relatively little material is consumed. Thus, in addition, a configuration can be provided that is economically extra favorable over known tower systems.

Further elaborations of the invention are described in the subclaims. The invention will presently be elucidated on the basis of a number of exemplary embodiments and the drawings. In the drawings:
Figure 1 shows a part of a tower known from the prior art;
Figure 2 is a perspective of a part of a first exemplary embodiment of the invention;
Figure 3 schematically shows a transition body of the first exemplary embodiment, in perspective;
Figure 4 schematically shows the transition body shown in Fig. 3 in a disassembled state;
Figure 5 schematically shows a part of the transition body and the lattice tower prior to assembly;
Figure 6 shows the parts shown in Fig. 5 after assembly; and
Figure 7 shows a similar drawing to Fig. 2 of a second exemplary embodiment of the invention.

Like or corresponding features are denoted in this application with like or corresponding reference signs.

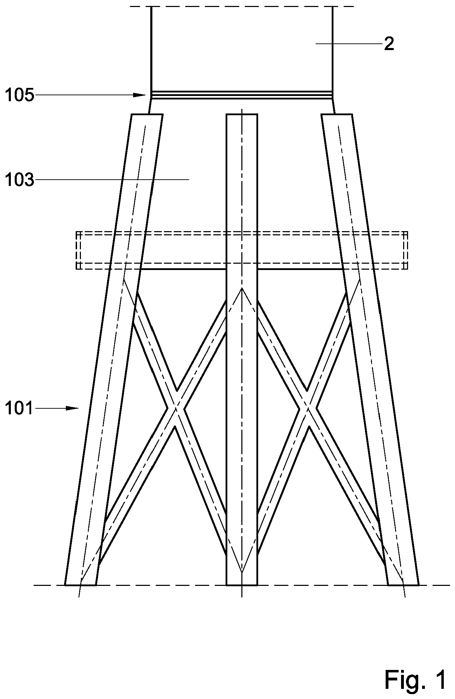

Fig. 1 shows a part of a tower known from the prior art (WO2008/064861), which tower includes a tubular upper part 2 having a substantially round (circular) cross section at least at the bottom, as well as a lattice tower part 101 which has a polygonal cross section at least at a top, and a transition body 103 extending between the tower parts 101, 2. Corners of the lattice tower part 101 are defined by respective substantially vertical corner posts/legs. As follows from the drawing, an uppermost part of the lattice tower part 101 extends along the transition body 103, in a vertical direction, i.e., the uppermost part of the lattice tower part 101 extends into a transition region defined by the transition body 103. In the known tower, the transition body 103 is implemented as a frustoconical envelope.

A lattice tower part 101 as mentioned and the tubular upper part 2 may be designed in different manners, which will be clear to those skilled in the art. Thus, the lattice tower part 101 can have, for example, a triangular cross section, with three posts, or a quadrangular cross section, with four posts, or an otherwise polygonal cross section. In particular, the lattice tower part 101 comprises a number of corner posts or main legs B, which extend somewhat obliquely upwards (and converge mutually), preferably in a mutually symmetrical arrangement (in particular with rotational symmetry relative to a central vertical axis of symmetry). The main legs B are coupled to each other by multiple cross connections so as to provide a relatively stiff and strong construction. Preferably, the main legs B are tubular (in particular having a constant circular diameter).

The tubular upper part 2 can comprise a substantially closed envelope, preferably having a circular cross section throughout its length, which may or may not have a substantially constant diameter. The upper part 2 is provided at the top with a generator (normally with blades) known per se, not represented, which is configured to generate electricity from wind power. The upper part 2 may for instance be coupled to the transition body 103 by means of a suitable flange coupling 105. After assembly, the tubular upper part 2 extends in particular centrally above the lattice part 101 (i.e., with longitudinal centerlines mutually aligned).

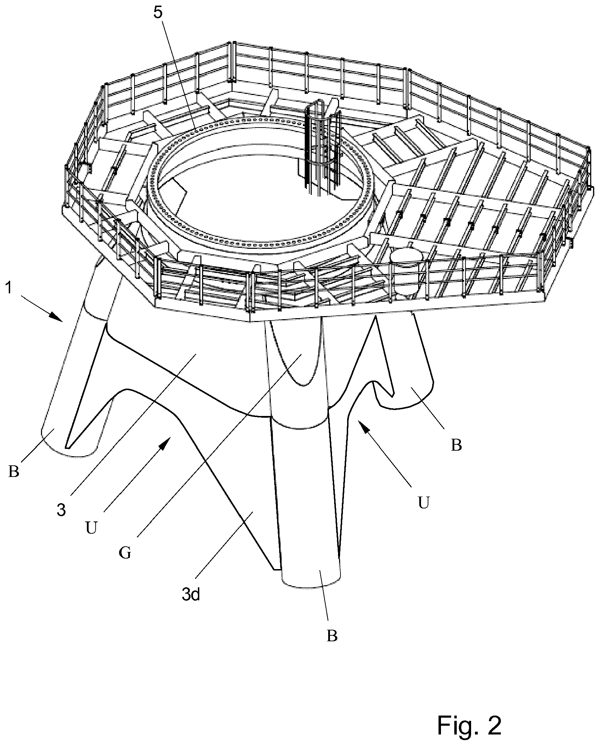

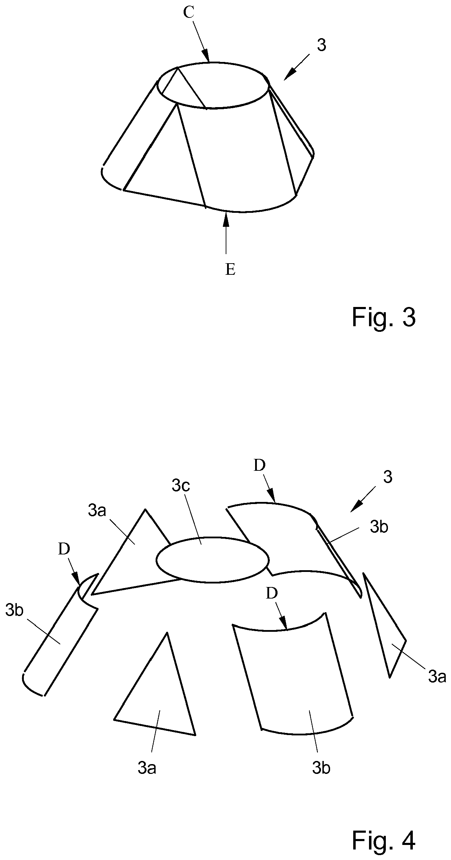

Fig. 2 shows a part of an exemplary embodiment according to the present invention. The exemplary embodiment comprises a transition body 3 to couple a lattice tower part 1 (of which only a top part, viz., uppermost sections of respective main legs B, is visible) to a tubular upper part 2 (not shown in Fig. 2), for example, via a circular flange 5. The exemplary embodiment differs from the known configuration shown in Fig. 1 in that the transition body 103 is not implemented as a frustoconical envelope. In a particularly advantageous manner, the exemplary embodiment includes a transition body 3 which has a lowermost part with a polygonal cross section adapted specifically to the lattice tower part. Further, the transition body 3 includes an uppermost part having a circular cross section adapted to the circular cross section of the tubular tower part. A basic configuration of the transition body 3 is represented in Figs. 3-4.

As Fig. 3 shows, the transition body 3 in this example includes a multiangular bottom edge E (having as many angles as the number of angles of the lattice tower, viz., three in this example), with a multiangular contour between the bottom edge and a circular top edge C. In the present example, the transition body 3 is provided with substantially rounded external corners, and straight, flat parts extending therebetween. In particular, the transition body 3 is substantially, and preferably completely, manufactured of plate material, for example, of steel.

According to a further elaboration, the transition body 3 is provided with a number of mutually coupled, substantially straight (i.e., non-curved) plate parts 3a, which extend between the corners of the body.

The straight plate parts 3a, after tower assembly, can extend, for example, parallel to longitudinal sides of the subjacent lattice tower 1 (these longitudinal sides being defined in particular by planes extending between each pair of adjacent corner legs B).

In the example, the straight plate parts are substantially triangle-shaped plate parts 3a. Each of these plate parts 3a is provided with a top point/corner which is at or near the circular top edge C. The remaining two points/corners of each of the triangular plate parts 3a are at or near the bottom edge E of the transition body 3 shown.

The straight plate parts 3a can be coupled to each other in different manners, for example, through direct welded joints and/or via angle sections or the like.

According to an extra advantageous elaboration, the transition body 3 includes a number of bent plate parts 3b which each have a substantially constant radius of curvature, and in particular comprise circular cylinder sections.

These bent plate parts 3b may be formed, for example, by roll bending a flat plate or by cutting-through a circular cylinder tube or casing, or in a different manner. The present bent plate parts 3b, viewed in a transversal cross section, have a slightly elliptical curvature. This can be achieved, for example, by roll bending a flat plate or by cutting-through a circular cylinder tube or casing slightly obliquely, which will be clear to those skilled in the art. The curved plate parts 3b may each be formed such that these parts 3b, at least at one end, are provided with a circular section-shaped end edge D.

In the example, the (circular) top edge C of the transition body 3 is formed by the circular section-shaped end edges D of the plate parts 3b mentioned. The end edges D of the bent plate parts 3b may be fixed to a strengthening element, for example, a ring-shaped or plate-shaped element 3c, and may be attached, for example, directly or indirectly, to a flange 5 as mentioned (to receive/carry an upper tower part 2).

The bent plate parts 3b described here can be manufactured relatively simply, for example, in a cutting process, a rolling process and/or both. As the curvature of the bent plate parts 3b to be manufactured in each case is constant in one direction, a rolling process can be carried out particularly simply.

In the example shown in Figs. 2-4, these curved plate parts form the corners of the body 3, and couple the straight plate parts 3a. The various plate parts 3a, 3b can be fixed to each other in different manners, for example, by means of welded joints.

As Fig. 2 shows further, the transition body 3 in a further elaboration may be provided, along a bottom edge, with recesses situated between lowermost corner parts 3d, for example, substantially V-shaped or substantially U-shaped recesses U. In this manner, material consumption can be reduced further. The lowermost corner parts 3d can comprise, for example, lowermost sections of the bent (plate) parts 3b.

Further, each flat side of the transition body 3 may be formed, for example, by one or several respective flat plate parts 3a. In addition, each bent corner part 3b of the transition body 3 may be formed, for example, by one or several respective bent plate parts 3b. These several plate parts for forming a bent part 3b or flat part 3a may be fixed to each other, for example, through suitable welded joints, which will be clear to those skilled in the art.

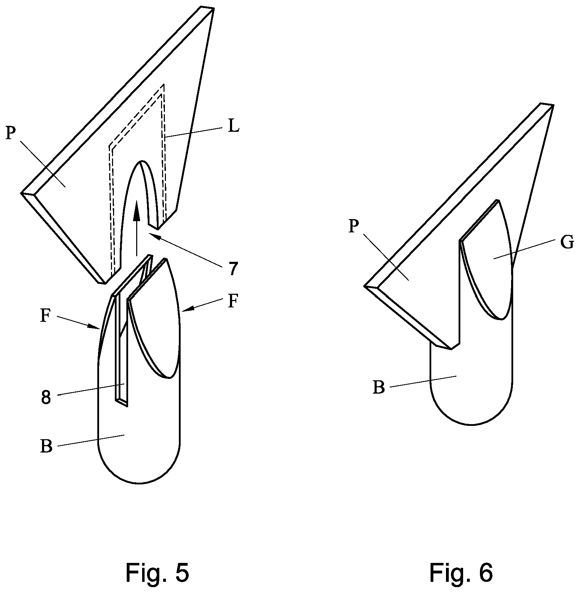

Coupling the lattice tower 1 to the transition body 3 can be carried out in different manners. According to a further elaboration, the lattice tower 1 may by an upper part thereof, viz., uppermost sections (end parts) of the legs B, be slot-connected ("slotted in") with the transition body, and preferably be welded together. Figs. 5 and 6 show a preferred embodiment of such a coupling, i.e., between a plate part P which represents a corner part 3d of the transition body 3, and a main leg B of the lattice tower part 1. In Figs. 5, 6 a straight plate part P is shown as corner part 3d. It will be clear that the plate part can also be a curved corner part 3b, 3d (as in Fig. 2).

As follows from Figs. 5-6, the corner parts P (3b, 3d) of the transition body 3 can each be provided, in a bottom edge thereof, with a recess 7, for example, a substantially U-shaped notch, which extends within a welding area indicated with broken lines L. By the use of this recess 7, stress concentrations at the respective connection can be reduced. The broken lines L are, in particular, welding seam locations, where edges of the leg B to be fixed, touch, upon assembly, the corner part P (3b, 3d) (and along those welding locations are fixed to the corner part 3d through welded joints).

Tubular end parts of the legs B can each be provided with slots 8 to engage the transition body 3, and in particular to slide over a corner part P (3b, 3d) over a defined distance. The tube wall of each leg B may, for example, be advantageously provided with two parallel straight slots 8 extending opposite each other, for receiving a corner part 3b, 3d (curved about one single axis).

As Fig. 2 shows, tubular parts of the legs B may be designed, for example, to be slid substantially throughout the height of the transition body 3 onto the corners of that body, via respective slots 8. In an alternative elaboration, the legs may be slid, for example, over just a relatively short distance onto the corners 3d of the transition body. Figs. 2 and 6 show the slot fixation after assembly, with the legs B each welded via slot edges to the plate material (P) of the transition body, along respective welding lines L.

In the example, the tubular upper parts of the legs B are furthermore provided with tapering tube parts F extending along the respective slots 8, to reduce stress concentrations. Preferably, cover plates G are provided (in this case elliptically shaped plates G) to close off the tubular upper parts along the tapering edges.

Building the tower can comprise, for example, the following steps, in a random order:
placing the lattice tower part 1;
providing the transition body 3 on the lattice tower part; and
placing the tubular tower part 2.

The transition body 3 can be arranged at different moments, for example, prior to and/or during placement of the lattice tower part, which will be clear to those skilled in the art. Owing to the above-described configuration, a relatively rapid and accurate assembly of the tower can be achieved. In addition, the tower can be built from relatively little material, especially with a transition body 3 constructed from relatively little (plate) material. Moreover, the shape of the transition body 3 leads to a very stable and strong construction.

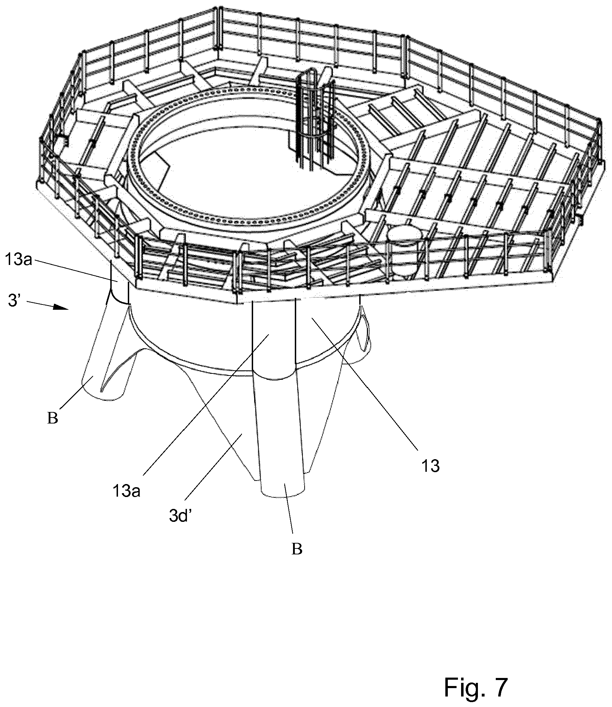

Fig. 7 shows an alternative, likewise advantageous, elaboration of the invention, which is different from the example shown in Figs. 2-4 in that the transition body 3' is provided with a circular cylinder-shaped upper part 13 which has a constant diameter. The circular cylinder-shaped upper part 13 may be provided with optional corner parts 13a (e.g., tube sections 13a) to provide a polygonal cross section adapted to the lattice tower part 1 (i.e., the legs B). The uppermost part of the circular cylinder-shaped part 13 has a diameter associated with the tubular tower part. Further, the transition body 3' is provided with corner leg parts 3d' extending under the circular cylinder-shaped upper part 13, which receive the lattice tower legs B (and, for example, are fixed thereto through the above-described slot-weld connections).

The corner leg parts 3d' are preferably curved plate parts, and preferably have each a substantially constant radius of curvature (to this end, the corner leg parts 3d' may comprise, for example, circular cylinder sections). The curved corner leg parts 3d' can each be formed such that these parts 3d' are provided at least at one end with a circular section-shaped end edge D, which adjoins a circular bottom edge of the cylinder part 13.

To those skilled in the art it will be clear that the invention is not limited to the exemplary embodiments described. Diverse modifications are possible within the scope of the invention as set forth in the following claims.

## Claims

1. A tower for a wind energy device, including a lattice tower part (1) which has a polygonal cross section at least at a top, and a tubular tower part (2) extending thereabove which has a substantially circular cross section at a bottom, wherein the lattice tower part (1) and the tubular tower part (2) are coupled to each other by means of a transition body (3), wherein the lattice tower part (1) extends partly along the transition body (3), in a vertical direction, wherein the transition body (3) includes a lowermost part having a polygonal cross section adapted to the lattice tower part, as well as an uppermost part having a circular cross section adapted to the circular cross section of the tubular tower part, wherein the lattice tower part (1) has tubular main legs (B), wherein the transition body (3) is provided with substantially rounded external corners, wherein the transition body (3) is provided with one or more bent plate parts (3b) which each have a substantially constant radius of curvature, and in particular comprise a circular cylinder section, to form the substantially rounded external corners, wherein the transition body (3) is provided with a number of substantially straight plate parts (3a) coupled to each other, and wherein the straight plate parts (3a) are coupled to each other through bent plate parts (3b), **characterised in that** the lattice tower (1), by an upper part thereof, is slotted-in with the transition body (3), wherein the lattice tower (1) is provided with tubular upper parts sticking up which are each provided with slots (8) to engage the transition body (3), and in particular having tapering tube parts extending along those slots (8).

2. A tower according to claim 1, wherein the transition body (3) is provided with a multiangular bottom edge, and/or at least partly with a multiangular contour.

3. A tower according to claim 1 or 2, wherein the transition body (3) is provided with a circular top edge.

4. A tower according to any one of the preceding claims , wherein the straight plate parts (3a) are substantially triangle-shaped plate parts.

5. A tower according to any one of the preceding claims, wherein the lattice tower (1) is provided with at least three, slightly obliquely upwardly extending main legs (B), preferably in a mutually symmetrical arrangement.

6. A tower according to any one of the preceding claims, wherein the transition body (3) along a bottom edge thereof is provided with recesses (7), for example, substantially V-shaped or substantially U-shaped recesses.

7. A method for building a tower according to any one of the preceding claims, which comprises placing said lattice tower part (1), providing said transition body (3) on the lattice tower part before and/or during placement of the lattice tower part, and placing the tubular tower part (2) on the transition body.

## Patentansprüche

1. Turm für eine Windenergieanlage, umfassend einen gitterförmigen Turmteil (1), der mindestens an einer Oberseite einen polygonalen Querschnitt hat, und einen darüber verlaufenden röhrenförmigen Turmteil (2), der einen im Wesentlichen kreisförmigen Querschnitt an einer Unterseite hat, wobei der gitterförmige Turmteil (1) und der röhrenförmige Turmteil (2) mittels eines Übergangskörpers (3) aneinandergekoppelt sind, wobei der gitterförmige Turmteil (1) teilweise entlang des Übergangskörpers (3) in einer vertikalen Richtung verläuft, wobei der Übergangskörper (3) einen untersten Teil mit einem polygonalen Querschnitt, angepasst an den gitterförmigen Turmteil, sowie einen obersten Teil mit einem kreisförmigen Querschnitt, angepasst an den kreisförmigen Querschnitt des röhrenförmigen Turmteils, umfasst, wobei der gitterförmige Turmteil (1) röhrenförmige Hauptbeine (B) hat,
wobei der Übergangskörper (3) mit im Wesentlichen gerundeten externen Ecken versehen ist, wobei der Übergangskörper (3) mit einem oder mehreren gebogenen Plattenteilen (3b) versehen ist, die jeweils einen im Wesentlichen konstanten Krümmungsradius haben und insbesondere einen kreisförmigen Zylinderabschnitt umfassen, um die im Wesentlichen gerundeten externen Ecken zu bilden, wobei der Übergangskörper (3) mit einer Anzahl von im Wesentlichen aneinandergekoppelten geraden Plattenteilen (3a) versehen ist, und
wobei die geraden Plattenteile (3a) durch gebogene Plattenteile (3b) aneinandergekoppelt sind,
**dadurch gekennzeichnet, dass** der gitterförmige Turm (1), durch einen oberen Teil davon, in den Übergangskörper (3) eingesteckt ist, wobei der gitterförmige Turm (1) mit röhrenförmigen hochstehenden oberen Teilen versehen ist, die jeweils mit Schlitzen (8) zum Eingreifen mit dem Übergangskörper (3) versehen sind und insbesondere konusförmige Röhrenteile, verlaufend entlang dieser Schlitze (8), haben.

2. Turm nach Anspruch 1, wobei der Übergangskörper (3) mit einer mehrwinkligen Unterkante und/oder mindestens mit einer mehrwinkligen Kontur versehen ist.

3. Turm nach Anspruch 1 oder 2, wobei der Übergangskörper (3) mit einer kreisförmigen Oberkante versehen ist.

4. Turm nach einem der vorhergehenden Ansprüche, wobei die geraden Plattenteile (3a) im Wesentlichen dreiecksförmige Plattenteile sind.

5. Turm nach einem der vorhergehenden Ansprüche, wobei der Gitterturm (1) mit mindestens drei leicht schräg nach oben verlaufenden Hauptbeinen (B) versehen ist, bevorzugt in einer zueinander symmetrischen Anordnung.

6. Turm nach einem der vorhergehenden Ansprüche, wobei der Übergangskörper (3) entlang einer Unterkante davon mit Vertiefungen (7) versehen ist, zum Beispiel im Wesentlichen V-förmigen oder im Wesentlichen U-förmigen Vertiefungen.

7. Verfahren zum Bauen eines Turmes nach einem der vorhergehenden Ansprüche, umfassend, dass der gitterförmige Turmteil (1) platziert wird, der Übergangskörper (3) auf dem gitterförmigen Turmteil vor und/oder während der Platzierung des gitterförmigen Turmteils bereitgestellt wird und der röhrenförmige Turmteil (2) auf dem Übergangskörper platziert wird.

## Revendications

1. Tour pour une éolienne, comprenant une partie de tour en treillis (1) qui a une section transversale polygonale au moins au niveau d'une partie supérieure, et une partie de tour tubulaire (2) s'étendant au-dessus, qui a une section transversale sensiblement circulaire au niveau d'un fond, dans laquelle la partie de tour en treillis (1) et la partie de tour tubulaire (2) sont couplées au moyen d'un corps de transition (3), dans laquelle la partie de tour en treillis (1) s'étend partiellement le long du corps de transition (3), dans une direction verticale, dans laquelle le corps de transition (3) comprend la partie la plus basse qui a une section transversale polygonale adaptée à la partie de tour en treillis, ainsi que la partie la plus haute qui a une section transversale adaptée à la section transversale circulaire de la partie de tour tubulaire, dans laquelle la partie de tour en treillis (1) a des jambes principales tubulaires (B), dans laquelle le corps de transition (3) est prévu avec des coins externes sensiblement arrondis, dans laquelle le corps de transition (3) est prévu avec une ou plusieurs parties de plaque courbées (3b) qui ont chacune un rayon de courbure sensiblement constant, et en particulier comprennent une section de cylindre circulaire, afin de former les coins externes sensiblement arrondis, dans laquelle le corps de transition (3) est prévu avec un certain nombre de parties de plaque droites (3a) couplées entre elles, et
dans laquelle les parties de plaque droites (3a) sont couplées entre elles par le biais des parties de plaque courbées (3b), **caractérisée en ce que** la tour en treillis (1), par sa partie supérieure, est fendue avec le corps de transition (3), dans laquelle la tour en treillis (1) est prévue avec des parties supérieures tubulaires visibles qui sont chacune prévues avec des fentes (8) pour mettre en prise le corps de transition (3) et en particulier ayant des parties de tube progressivement rétrécies s'étendant le long de ces fentes (8).

2. Tour selon la revendication 1, dans laquelle le corps de transition (3) est prévu avec un bord inférieur à plusieurs angles et/ou au moins partiellement avec un contour à plusieurs angles.

3. Tour selon la revendication 1 ou 2, dans laquelle le corps de transition (3) est prévu avec un bord supérieur circulaire.

4. Tour selon l'une quelconque des revendications précédentes, dans laquelle les parties de plaque droites (3a) sont des parties de plaque sensiblement de forme triangulaire.

5. Tour selon l'une quelconque des revendications précédentes, dans laquelle la tour en treillis (1) est prévue avec au moins trois jambes principales (B) s'étendant vers le haut de manière légèrement oblique, de préférence dans un agencement mutuellement symétrique.

6. Tour selon l'une quelconque des revendications précédentes, dans laquelle le corps de transition (3) le long de son bord inférieur est prévu avec des évidements (7), par exemple, des évidements sensiblement en forme de V ou sensiblement en forme de U.

7. Procédé pour construire une tour selon l'une quelconque des revendications précédentes, qui comprend les étapes consistant à placer ladite partie de tour en treillis (1), prévoir ledit corps de transition (3) sur la partie de tour en treillis avant et/ou pendant la mise en place de la partie de tour en treillis, et placer la partie de tour tubulaire (2) sur le corps de transition.
